## Europäisches Patentamt

## European Patent Office

## Office européen des brevets

(19)

(11) Numéro de publication: **0 090 975**
**B1**

(12) **FASCICULE DE BREVET EUROPÉEN**

(45) Date de publication du fascicule du brevet:
**04.11.87**

(51) Int. Cl.⁴: **A 61 C 9/00**

(21) Numéro de dépôt: **83102653.9**

(22) Date de dépôt: **17.03.83**

(54) Porte-empreintes pour prothèses dentaires.

(30) Priorité: **06.04.82 FR 8205917**

(43) Date de publication de la demande:
**12.10.83 Bulletin 83/41**

(45) Mention de la délivrance du brevet:
**04.11.87 Bulletin 87/45**

(84) Etats contractants désignés:
**AT BE CH DE GB IT LI LU NL SE**

(56) Documents cité:
**DE-C-483 466**
**DE-C-845 233**
**FR-A-2 048 644**
**US-A-1 608 632**
**US-A-2 089 715**

(73) Titulaire: **Jouvin, Jean- Luc, 42, avenue du Général
Leclerc, F-72000 Le Mans (FR)**

(72) Inventeur: **Jouvin, Jean- Luc, 42, avenue du
Général Leclerc, F-72000 Le Mans (FR)**

(74) Mandataire: **Casalonga, Alain, BUREAU D.A.
CASALONGA OFFICE JOSSE & PETIT
Morassistrasse 8, D-8000 München 5 (DE)**

## Description

La présente invention se rapporte à un porte-empreintes pour des prothèses dentaires, comprenant, pour recevoir de la pâte à empreintes restant déformable après sa prise, une gouttière qui est incurvée en forme de U à ailes divergentes dans un plan sensiblement parallèle au fond de la gouttière et qui présente un profil transversal lui aussi en forme de U à ailes divergentes, cette gouttière étant pourvue intérieurement de moyens de rétention de la pâte et étant prolongée, à l'opposé des deux extrémités de la forme incourvée principale de la gouttière, par une poignée de préhension.

Ces porte-empreintes sont utilisés pour prendre l'empreinte des dents d'un maxillaire, empreinte à partir de laquelle le prothésiste réalise un modèl en plâtre.

Jusqu'à présent, les porte-empreintes sont réalisés en tôle emboutie, la rétention de la pâte dans la gouttière étant assurée grâce à des trous percés dans cette dernière.

Les inconvénients de ces porte-empreintes connus sont multiples.

Bien que les porte-empreintes soient réalisés en tôle mince déformable, le démoulage du modèle en plâtre de l'empreinte et ensuite l'enlèvement de l'empreinte du porte-empreintes présente des difficultés. En général, l'empreinte subit des détériorations, voire une déstruction. Il n'est donc pas possible de réutiliser l'empreinte.

Du fait que les porte-empreintes doivent être déformables pour permettre le démoulage, ils ne sont pas suffisamment rigides pour l'utilisation de la technique de prise d'empreintes en deux temps dite "Wash Technic" qui implique l'utilisation de pâte plus rigide à base de silicone.

Par ailleurs, le nettoyage des porte-empreintes est fastidieux en raison de l'adhérence de la pâte aux trous de rétention.

Il existe également des porte-empreintes, toujours en tôle emboutie, sur lesquels la rétention de la pâte s'effectue à l'aide de fils métalliques soudés aux bords supérieurs internes de la gouttière. Ici également, il est nécessaire de déformer le porte-empreintes en vue du démoulage. De plus, la pâte risque de se décoller au niveau du fond de la gouttière, du fait de l'absence de moyen de rétention à cet endroit, lors de la séparation de l'empreinte du maxillaire (désinsertion). En outre, du fait de la présence des fils métalliques aux bords supérieurs internes de la gouttière, il est nécessaire de donner à la gouttière en elle-même une largeur importante, ce qui implique l'utilisation d'une grande quantité de pâte.

On connait par exemple par le document DE-C-483 466 un porte-empreintes en un matériau massif rigide divisé en plusieurs parties et comportant des moyens d'assemblage pour relier lesdites parties de façon separable. Comme ce porte-empreintes connu est destiné à recevoir de la pâte dure, telle que du plâtre, il ne dispose pas de moyens de rétention de la pâte, la désinsertion de l'empreinte se faisant par fracture de l'empreinte.

On connaît par ailleurs par le document DE-C-845 233 un porte-emprintes selon le préambule de la revendication 1, sur lequel les moyens de rétention sont constitués par des rugosités ou un gaufrage de la face intérieure de la gouttière. L'effet de rétention ainsi obtenu est souvent insuffisant.

La présente invention a pour objet un porte-empreintes pour prothèses dentaires du type défini ci-dessus qui, tout en assuraut une rétention parfaite de la pâte au porte-empreintes, permet un démoulage très aisé du modèle et un enlèvement sans problème de l'empreinte du porte-empreintes, sans risque de détérioration de l'empreinte, d' où la possibilité de réutiliser l'empreinte et eventuellement de la conserver, ce porte-empreintes se prêtant sans difficulté à toutes les techniques de prise d'empreintes (également en deux temps) et nécessitant une quantité minimale de pâte.

Le porte-empreintes conforme à l'invention pour prothèses dentaires réalisé dans son ensemble en un matériau massif rigide, est divise en deux parties suivant une ligne passant par le fond de la gouttière sur toute la longueur de cette dernière. Lesdits moyens de rétention de la pâte comportent, sur la surface intérieure de chaque flanc de la gouttière, au moins une rainure sensiblement parallèle au fond de la gouttière et conformée de manière à être en contre-dépouille vers le côté ouvert du profil de la gouttière et en dépouillé vers la rainure du flanc opposé. Le porte-empreintes comprend des moyens d'assemblage pour relier lesdites deux parties de façon séparable entre elles de manière à permettre une séparation des deux parties suivant l'axe de symétrie de la gouttière en vue de l'ouverture de la gouttière et de l'enlèvement de l'empreinte du porte-empreintes sans endommagement de l'empreinte.

Cette possibilité d'ouvrir la gouttière permet, bien que la gouttière soit réalisée en un matériau rigide et ne soit donc pas déformable, de dégager sans difficulté l'empreinte avec le modèle en platre du porte-empreintes, sans endommager aucunement l'empreinte, de démouler ensuite le modèle en plâtre de l'empreinte, cette dernière n'étant plus maintenue dans le porte-empreintes, et de réutiliser, en cas de besoin, l'empreinte non endommagée, le porte-empreintes rigide pouvant être refermé sur l'empreinte pour rendre à cette dernière exactement sa forme initiale.

De preférence, les moyens de rétention comprennent en outre, au fond de la gouttière, une rainure ayant un profil en queue d'aronde ou un profil analogue en contre-dépouille, la gouttière étant divisée au fond de la dite rainure. Ainsi, bien que la rainure de rétention au fond de la gouttière présente un profil en contre-dépouille, le démoulage de l'empreinte de cette rainure ne pose aucune difficulté après ouverture de la gouttière.

Pour faciliter la séparation des deux parties de la gouttière et surtout pour faciliter le réassemblage des deux parties de la gouttière, il est avantageux que cette dernière comporte, sur ses deux parties, des moyens de guidage coopérant les uns avec les autres lors de l'assemblage et de la séparation des deux parties, en vue d'assurer un guidage réciproque des deux parties l'une par rapport à l'autre.

Ces moyens de guidage pervent être constituées avantageusement par des profils complémentaires de la surface de contact réciproque des deux parties.

De préférence, ces profils complémentaires de guidage peuvent comprendre, à la surface de contact des deux parties, une rainure en retrait dans l'une des deux parties et une languette en saillie sur l'autre partie.

Les moyens d'assemblage des deux parties de la gouttière peuvent être de nature très diverse. On peut envisager par exemple des systèmes à cliquet, à genouillère, etc... Cependant, suivant un mode de réalisation avantageux, lesdits moyens d'assemblage comprennent un système à vis dont l'axe coïncide avec l'axe de symétrie du U de la gouttière.

Pour faciliter encore la manoeuvre de système à vis et en particulier pour faciliter l'ouverture de la gouttière, il est avantageux que le système à vis comprenne une vis dont la tête est prisonnière dans une ouverture transversale de la poignée solidaire de la partie extérieure de la gouttière et dont le fût traverse librement ladite partie extérieure de la gouttière et est vissé dans un trou taraudé de la partie intérieure de la gouttière. Grâce à cet agencement, il suffit de faire tourner la vis dans le sens de dévissage pour obtenir non seulement un désassemblage mais simultanément une séparation forcée des deux parties de la gouttière l'une de l'autre des que la tête de la vis vient buter contre la paroi de l'ouverture, opposée à la gouttière.

En se référant au dessin annexé, on va décrire ci-après plus en détail un mode de réalisation illustratif et non limitatif d'un porte-empreintes conforme à l'invention; sur le dessin:

la fig. 1 est une vue en plan d'un porte-empreintes conforme à l'invention, la gouttière étant fermée;

la fig. 2 est une vue en plan du porte-empreintes de la fig. 1, la gouttière étant partiellement ouverte;

la fig. 3 est une coupe de la gouttière, selon III-III de la fig. 1.

Le porte-empreintes pour prothèses dentaires illustré par le dessin comprend une partie 1 formant une gouttière destinée à recevoir la pâte à empreintes non représentée. La gouttière 1 est incurvée, dans un plan sensiblement parallèle au fond de la gouttière 1, sous la forme d'un U à ailes divergentes, dont la forme correspond au tracé d'implantation des dents dans les maxillaires.

La partie 1 formant gouttière est prolongée, à l'opposé des extrémités libres de cette dernière, par une poignée de préhension 2.

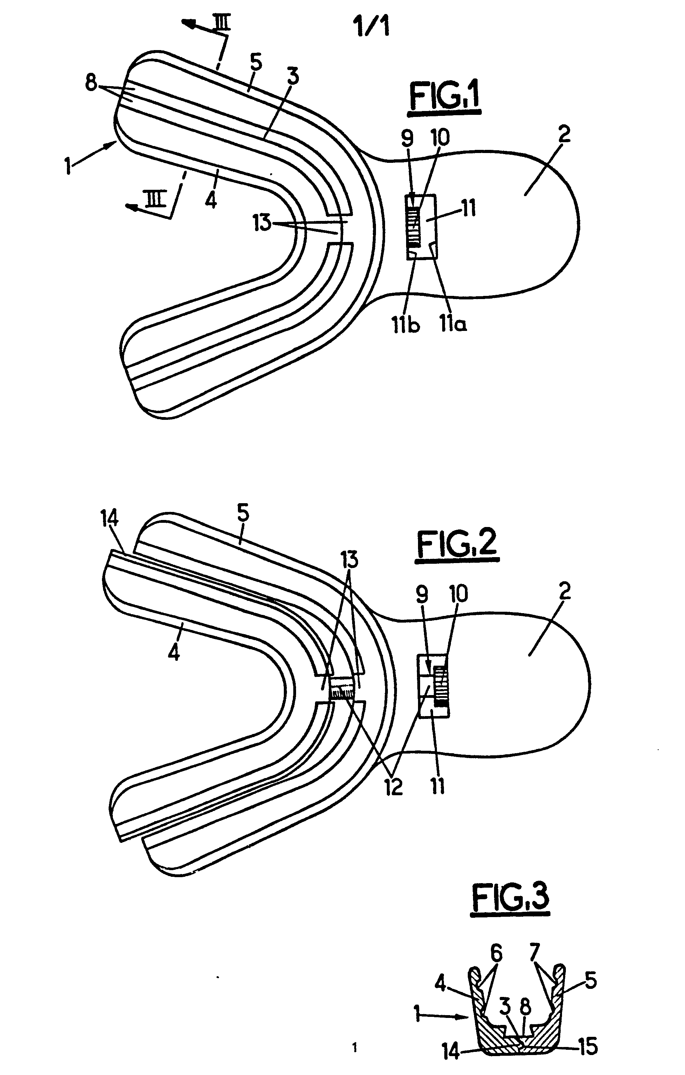

La gouttière 1 présente un profil transversal en U à ailes divergentes, visible sur la fig. 3. La gouttière 1 est divisée à son fond, sur toute sa longueur, suivant une ligne référencée 3 sur la fig. 1, en une partre intérieure 4 et une partie extérieure 5. La partie extérieure 5 est réalisée d'une seule pièce avec la poignée 2.

Chaque flanc de la gouttière 1, c'est-à-dire chacune des deux parties 4 et 5 de la gouttière, comporte intérieurement deux rainures 6, 7 superposées, s'étendant sur toute la longueur de la gouttière 1. Les rainures 6 et 7 sont en contre-dépouille vers l'ouverture supérieure de la gouttière 1.

En outre, la gouttière 1 comporte, à son fond, une rainure 8 en queue d'aronde, c'est-à-dire également en contre-dépouille vers l'ouverture superieure de la gouttière 1. La ligne 3 de division de la gouttière 1 en deux parties 4 et 5 passe par le fond de la rainure 8.

L'assemblage des deux parties 4 et 5 de la gouttière 1 s'effectue à l'aide d'une vis 9 dont l'axe coïncide avec l'axe de symétrie du U de la gouttière 1. La tête 10 de la vis 9 est prisonnière d'une ouverture transversale 11 de la poignée 2. Le fût 12 de la vis 9 traverse librement la partie extérieure 5 de la gouttière 1 et est vissé dans la partie intérieure 4, laquelle comporte à cet effet un trou taraudé non représenté.

On reconnaît sur les fig. 1 et 2 que la rainure trapézoïdale 8 se trouvant au fond de la gouttière 1 est interrompue en 13, au milieu de la longueur de la gouttière 1. Cette partie 13 sert de butée pour limiter, lors de la prise de l'empreinte, l'enfoncement des incisives dans la pâte non représentée contenue dans la gouttière 1.

Pour la prise d'empreintes, on introdurt de la pâte a empreintes dans la gouttière 1 en position fermée visible sur la fig. 1. La prise de l'empreinte s'effectue de façon usuelle, la gouttière étant présentée par son côté ouvert face à la denture dont il s'agit de prendre l'empreinte, le praticien exerce une pression sur le porte-empreintes de manière que la denture dont il s'agit de prendre l'empreinte soit enfoncée dans la pâte. La prise d'empreintes peut se faire soit en un seul temps, sort également en deux temps avec désinsertion intermédiaire, comme cela est connu avec des pâtes à emprerntes dures, à base de silicones (Wash-Technic).

Les rainures 6, 7 et 8, toutes en contre-dépouille vers le côté ouvert de la gouttière 1, assurent une parfaite rétention de la pâte pendant la désinsertion. Après la désinsertion, le praticien dégage la pâte en excès le long des bords du porte-empreintes au moyen d'une lame de bistouri par exemple, car l'excédent de pâte qui a fusé vers l'extérieur de la gouttière et s'est trouvé rabattu par les lèvres ou la langue sur les faces externes de la gouttière, risque d'empêcher l'ouverture du porte-empreintes démontable.

Le prothésiste qui reçoit l'empreinte contenue dans le porte-empreintes, procède au moulage d'un modèle en plâtre de l'empreinte. Pour démouler ensuite le modèle en plâtre, le prothésiste fait tourner dans le sens de dévissage la vis 9 dont la tête 10 est avantageusement moletée. La vis 9 dans son ensemble se déplace alors vers la droite sur la fig. 1 jusqu'à ce que la tête 10 vienne porter contre le bord "arrière" de droite 11a de l'ouverture 11. La vis 9 ne pouvant ainsi plus se déplacer vers la droite, tout dévissage ultérieur de la vis 9 provoque un déplacement forcé vers la gauche de la partie intérieure 4 de la gouttière, donc une ouverture forcée du moule constitué par la gouttière 1. Le prothésiste peu continuer ce dévissage jusqu'à ce que le fût 12 de la vis 9 soit complétement dévissé du trou taraudé de la partie intérieure 4 de la gouttière 1, de sorte que la partie 4 se trouve libérée. Le prothésiste peut alors retirer sans aucun problème l'empreinte avec le modèle en plâtre et démouler le modèle sans détériorer l'empreinte qui n'est plus emprisonnée dans la gouttière du porte-empreintes.

Pour refermer ensuite le porte-empreintes, il suffit de présenter la partie intérieure 4 de la gouttière devant la partie extérieure 5 de la gouttière et de manoeuvrer la vis 9 pour l'engager dans le trou taraudé de la partie 4 et rapprocher ensuite les deux parties 4 et 5 jusqu'à la position selon la fig. 1 où la gouttière 1 est de nouveau fermée, la tête 10 de la vis 9 étant serrée contre le bord "avant" de gauche 11b de l'ouverture 11.

Il convient encore de noter que pour faciliter la fermeture de la gouttière 1, les deux parties de gouttière 4 et 5 comportent des moyens de guidage réciproque. Dans l'exemple représenté (fig. 3), ces moyens de guidage sont constitués par une languette 14 en saillie sur la partie intérieure de gouttière 4 et une rainure 15 en creux dans la partie de gouttière 5 à l'endroit de la surface de contact réciproque des parties 4 et 5, c'est-à-dire en dessous du fond de la rainure 8 en queue d'aronde.

Bien entendu, il serait possible de remplacer ce système à rainure et languette par des moyens différents, par exemple des épaulements.

Le porte-empreintes conforme à l'invention est réalisé en un matériau massif, par exemple en matière plastique ou en métal, de préférence un alliage léger. Pour empêcher, notamment en cas de réalisation du porte-empreintes en métal, tout risque d'adhérence de la pâte à empreintes à la gouttière, il peut être avantageux de revêtir au moins la gouttière intérieurement d'un matériau anti-adhésif, par exemple du polytétrafluoréthylène, ou toute autre résine fluorée, par exemple le matériau vendu sous la marque commerciale déposée "Fluorimid 10P".

Le porte-empreintes tel que décrit ci-dessus et représenté sur le dessin annexé peut recevoir de nombreuses modificatrons et variantes dans le cadre de l'invention. Ainsi, le système d'assemblage à vis des deux parties de la gouttière peut être remplacé par tout autre système d'assemblage, par exemple à cliquet ou à genouillère. Le nombre et le profil des rainures 6, 7 et 8 peuvent également être différents. Il importe uniquement que ces rainures soient en contre-dépouille vers l'ouverture de la gouttière et permettent par contre un démoulage sans problème de l'empreinte après ouverture de la gouttière, c'est-à-dire séparation des deux parties 4 et 5 de la gouttière suivant l'axe de symétrie de la gouttière.

Un avantage supplémentaire du porte-empreinte conforme à l'invention lié à la possibilité de supprimer au moyen d'un instrument tranchant l'excédent de pâte consiste en la visualisation de manière certaine de toute déformatron, même infime, dde la pâte à empreintes. Il est donc possible d'apprécier très facilement la stabilité dimensionnelle de la pâte utilisée, en observant le décalage qui peut survenir entre le bord de la pâte et le bord du porte-empreintes, pursque la pâte qui n'est pas maintenue par des trous, est libre de se rétracter. Il faut noter que pratiquement toutes les pâtes à empreintes se rétractent en vieillissant. D'un simple coup d'oeil, le praticien ou le prothésiste peut donc juger de la qualité de l'empreinte et écarter celle dont le vreillissement a provoqué une rétraction trop importante, source d'échec avec les techniques classiques, échec que l'on ne pourra constater, malheureusement que le jour de la pose de la prothèse en bouche.

## Revendications

1. Porte-empreintes pour prothèses dentaires comprenant, pour recevoir de la pâte à empreintes restant déformable après sa prise, une gouttière (1) qui est incurvée en forme de U à ailes divergentes dans un plan sensiblement parallèle au fond de la gouttière et qui présente un profil transversallui aussi en forme de U à ailes divergentes, ladite gouttière étant pourvue intérieurement de moyens de rétention de la pâte et étant prolongée, à l'opposé des deux extrémités libres de la forme incurvée principale de la gouttière, par une poignée de préhension (2), caractérisé par le fait que le porte-empreintes, réalisé dans son ensemble en un matériau massif rigide, est divisé en deux parties (4, 5) suivant une ligne passant par le fond de la gouttière, sur toute la longueur de cette dernière, que lesdits moyens de rétention de la pâte comportent, sur la face intérieure de chaque flanc de la gouttière, au moins une rainure (6, 7) sensiblement parallèle au fond de la gouttière et conformée de manière à être en contre-dépouille vers le côté ouvert du profil de la gouttière et en dépouille vers la rainure du flanc opposé, et que le porte-empreintes comprend des moyens d'assemblage (9) pour relier lesdites deux parties (4, 5) de façon séparable entre elles de manière à permettre une séparation des deux parties suivant l'axe de symétrie de la gouttière en vue de l'ouverture de la gouttière et de l'enlèvement de l'empreinte du porte-empreintes sans endommagement de l'empreinte.

2. Porte-empreintes suivant la revendication 1, caractérisée par le fait que lesdits moyens de rétention comprennent en outre, au fond de la gouttière, une rainure (8) ayant un profil en queue d'aronde ou un profil analogue en contre-dépouille, la gouttière étant divisée au fond de ladite rainure.

3. Porte-empreintes suivant l'une quelconque des revendications précédentes, caractérisé par le fait que la gouttière comporte, sur ses deux parties (4, 5), des moyens de guidage (14, 15) coopérant les uns avec les autres lors de l'assemblage et du désassemblage des deux parties, en vue du guidage réciproque desdites deux parties.

4. Porte-empreintes suivant la revendication 3, caractérisé par le fait que lesdits moyens de guidage (14, 15) sont constitués par des profils complémentaires de la surface de contact réciproque des deux parties de la gouttière.

5. Porte-empreintes suivant la revendication 4, caractérisé par le fait que lesdits moyens de guidage (14, 15) comprennent, à la surface de contact des deux parties de la gouttière, une rainure (15) dans l'une des parties (5) et une languette (14) sur l'autre partie (4) de la gouttière.

6. Porte-empreintes suivant l'une quelconque des revendications précédentes, caractérisé par le fait que lesdits moyens d'assemblage (9) comprennent un système à vis dont l'axe coïncide avec l'axe de symétrie de la gouttière.

7. Porte-empreintes suivant la revendication 6, caractérisé par le fait que le système à vis comprend une vis (9) dont la tête (10) est prisonnière dans une ouverture transversale (11) de la poignée (2) solidaire de la partie extérieure (5) de la gouttière et dont le fût (12) traverse librement ladite partie extérieure de la gouttière et est vissé dans un trou taraudé dans la partie intérieure (4) de la gouttière.

8. Porte-empreintes suivant l'une quelconque des revendications précédentes, caractérisé par le fait que la gouttière (1) est recouverte au moins intérieurement d'un matériau anti-adhésif.


**Patentansprüche**

1. Abdrucklöffel für zahnärztliche Prothese, mit einer Rinne (1) zum Aufnehmen einer Abdruckmasse, die nach ihrer Verwendung plastisch verformbar bleibt, welche Rinne (1) U-förmig gekrümmt mit Flügelteilen, die in einer Ebene im wesentlichen parallel unter der Rinne divergieren, verläuft und dabei ein Querschnittsprofil aufweist, das ebenfalls U-förmig mit divergierenden Flügelteilen ist, wobei die Rinne innen mit Mitteln zum Zurückhalten der Abdruckmasse versehen ist und, den beiden freien Enden der gebogenen Haupt-Form der Rinne gegenüberliegend, durch einen Griff (2) verlängert ist, dadurch gekennzeichnet, daß der Abdrucklöffel, der in seiner Gesamtheit aus einem massiven, steifen Material hergestellt ist, in zwei Teile (4, 5) folgend einer Linie, die durch den Boden der Rinne über die gesamte Länge der letzteren verläuft, unterteilt ist, daß die Mittel zum Zurückhalten der Abdruckmasse auf der Innenseite jedes der Flügelteile aus zumindest einer Rille (6, 7) bestehen, die im wesentlichen parallel zum Boden der Rinne verläuft und entsprechend der Art und Weise ihrer Ausbildung in Richtung der offenen Seite des Profils der Rinne hinterschnitten ist und schräg in Richtung der Rille des gegenüberliegenden Flügelteils liegt, und daß der Abdrucklöffel eine Verbindungseinrichtung (9) zum lösbaren Verbinden der zwei Teile (4, 5) in einer Weise enthält, die eine Trennung der zwei Teile folgend der Symmetrieachse der Rinne zum Zwecke einer Öffnung der Rinne und eine Entnahme des Abdrucks vom Abdrucklöffel ohne Beschädigung des Abdrucks gestattet.

2. Abdrucklöffel nach Anspruch 1, dadurch gekennzeichnet, daß die Mittel zum Zurückhalten außerdem am Boden der Rinne eine Rille (8) enthalten, die an ihrem Ende ein schwalbenschwanzförmiges Profil oder ein Profil analog einer Hinterschneidung hat, wobei die Rinne am Boden von der Rille unterteilt ist.

3. Abdrucklöffel nach einem der vorhergehenden Ansprüche, dadurch gekennzeichnet, daß die Rinne auf ihren beiden Teilen (4, 5) Führungsmittel (14, 15) aufweist, die miteinander beim Zusammenbauen oder Auseinandernehmen der beiden Teile zum Zwecke einer gegenseitigen Führung der beiden Teile zusammenwirken.

4. Abdrucklöffel nach Anspruch 3, dadurch gekennzeichnet, daß die Führungsmittel (14, 15) durch komplementäre Profile der gegenseitigen Berührungsflächen der beiden Teile der Rinne gebildet sind.

5. Abdrucklöffel nach Anspruch 4, dadurch gekennzeichnet, daß die Führungsmittel (14, 15) auf der Berührungsfläche der beiden Teile der Rinne aus einer Nut (15) in einem (5) der Teile und einer Feder (14) auf dem anderen (4) der Teile der Rinne bestehen.

6. Abdrucklöffel nach einem der vorhergehenden Ansprüche dadurch gekennzeichnet daß die Verbindungseinrichtung (9) aus einem Schraubsystem besteht, dessen Achse mit der Symmetrieachse der Rinne zusammenfällt.

7. Abdrucklöffel nach Anspruch 6, dadurch gekennzeichnet, daß das Schraubsystem eine Schraube (9) enthält, deren Kopf (10) in einer querliegenden Öffnung (11) des Griffes (2) festgehalten ist, der mit dem äußeren Teil (5) der Rinne verbungen ist, und deren Schaft (12) frei das äußere Teil der Rinne durchquert und in ein Gewindeloch in dem inneren Teil (4) der Rinne eingeschraubt ist.

8. Abdrucklöffel nach einem der vorhergehenden Ansprüche, dadurch gekennzeichnet, daß die Rinne (1) zumindest innen mit einem Antihaftmaterial bedeckt ist.

## Claims

1. Impression plate for dental prostheses, comprising, to receive impression mass remaining deformable after setting thereof, a channel (1) which is curved in a U-shape, with limbs diverging in a plane substantially parallel to the base of the channel and which exhibits a transverse cross-section which is itself also in a U-shape with diverging limbs, the said channel being provided internally with means for retaining the mass and being extended, opposite the two free ends of the principal curved shape of the channel, by a gripping handle (2), characterized in that the impression plate, constructed in its entirety of a rigid massive material, is divided into two parts (4, 5) along a line passing through the base of the channel, over the entire length of the latter, in that the said means for retaining the mass comprise, on the internal surface of each flank of the channel, at least one groove (6, 7) substantially parallel to the base of the channel and adapted in such a manner as to be re-entrant towards the open side of the cross-section of the channel and in relief towards the groove of the opposite flank, and in that the impression plate comprises assembly means (9) to connect the said two parts (4, 5) so as to be separable from one another, in such a manner as to permit separation of two parts along the axis of symmetry of the channel with a view to the opening of the channel and to the removal of the impression from the impression plate without damaging the impression.

2. Impression plate according to Claim 1, characterized in that the said retaining means further comprise, at the base of the channel, a groove (8) having a dovetail cross-section or a similar re-entrant cross-section, the channel being divided at the base of the said groove.

3. Impression plate according to either one of the preceding claims, characterized in that the channel comprises, on its two parts (4, 5), guide means (14, 15) cooperating with one another on assembly and on disassembly of the two parts, with a view to the mutual guiding of the said two parts.

4. Impression plate according to Claim 3, characterized in that the said guide means (14, 15) consist of complementary sections of the surface of mutual contact of the two parts of the channel.

5. Impression plate according to Claim 4, characterized in that the said guide means (14, 15) comprise, at the surface of contact of the two parts of the channel, a groove (15) in one of the parts (5) and a tongue (14) on the other part (4) of the channel.

6. Impression plate according to any one of the preceding claims, characterized in that the said assembly means (9) comprise a screw system, the axis of which is coincident with the axis of symmetry of the channel.

7. Impression plate according to Claim 4, characterized in that the screw system comprises a screw (9), the head (10) of which is captive within a transverse opening (11) of the handle (2) forming a solid unit with the outer part (5) of the channel and the shaft (12) of which freely traverses the said outer part of the channel and is screwed into a tapped hole in the inner part (4) of the channel.

8. Impression plate according to any one of the preceding claims, characterized in that the channel (1) is covered, at least on its interior, with an antiadhesive material.

1/1

FIG.1

FIG.2

FIG.3